# EUROPEAN PATENT SPECIFICATION

(11) **EP 2 827 962 B1**
(45) Date of publication and mention of the grant of the patent: **03.02.2016**
(21) Application number: 12709326.8
(22) Date of filing: 19.03.2012
(51) Int. Cl.: B01D 25/21

(54) **FILTER DEVICE**
FILTERVORRICHTUNG
APPAREIL DE FILTRATION

(43) Date of publication of application: 28.01.2015
(73) Proprietor: Outotec (Finland) Oy, 02230 Espoo (FI)
(72) Inventor: BÖHNKE, Bernd, 52249 Eschweiler (DE)
(74) Representative: Bauer, Dirk
(86) International application number: PCT/EP2012/054751
(87) International publication number: WO 2013/139362

(56) References cited:
- DE-A1- 1 461 450
- DE-U1-202005 006 535

## Description

### TECHNICAL FIELD

The invention relates to a filter device, having a stationary head piece and a movable end piece, and a pack of a plurality of specimens including a recess plate between the head piece and the end piece, the recess plate having a base body, and a recess in the base body, that forms a filter chamber between adjacent specimens, wherein the filter device has a filter cloth between the adjacent specimens for retaining a solid content of a suspension as a filter cake, and allowing a remaining liquid fraction of the suspension to pass as a filtrate, and wherein the recess plate has a fluid pipe for discharging the filtrate out of the recess plate, that runs along the slender edge, a fluid duct that connects the fluid pipe to the filter chamber, and an extension, that is connected to a slender edge of the base body.

The recess plate mentioned above is commonly known, inter alia from DE 103 04 004. Furthermore, JVK Filtration Systems GmbH/Germany, supplier of recess plates, is known to have combined two base bodies of size 1200 x 1200 mm and installed the same to a large filter device.

### BACKGROUND ART

The known recess plates, in particular made of polypropylene, allow for building a filter device that exceeds the production dimensions of a common injection moulding process, and the dimensions of common transportation facilities. In the known recess plates, the extension that is connected to the base body is a second base body, both base bodies comprising respective recesses and fluid ducts for piping the suspension into the respective filtrate chambers, and the filtrate out of the same. The known recess plates use support frames for supporting the base bodies and keeping the base bodies in position.

Further commonly known recess plates comprise fluid pipes for several fluids, in particular for the suspension, for the filtrate, for a washing liquid, for a drying gas, and for a squeezing fluid, the fluid pipes distributing the respective fluid along a slender edge of the base body to several inlets into the respective filter chamber, or collecting it from several outlets out of the filter chamber. Within the known recess plates, these fluid pipes either are formed inside the base body, or inside the extension, or externally flanged to the recess plate.

Documents DE 20 2005 006535 U1 and DE 14 61 450 A1 respectively disclose a chamber filter plate for a filter press, which plate includes a base body with a recess. The plate edge that frames the recess has at least one hollow channel formed therein, extending in a longitudinal direction. Fluid ducts connect the recess to the channel.

Where overall dimensions of a filter device are commonly restricted, both the support frames, the respective connecting device between the base body and the extension, and the fluid pipes of the known recess plates require space, thus reducing the potential remaining effective filter surface of the recess plate.

### PROBLEM TO BE SOLVED

It is an object of the invention to enlarge the effective filter surface of the recess plate.

### SUMMARY OF INVENTION

Based on the known filter device, according to the invention it is suggested that the fluid pipe runs between the base body and the extension. Forming a fluid duct between the base body and the extension reduces the space required inside the base body or inside the extension, and thus enlarges the possible effective filter surface of the recess plate.

In a filter device according to the invention, the extension may be a second base body, having a second fluid duct that connects the fluid pipe to a second filter chamber. The effective filter surface of such recess plate is larger than the respective value of one single base body. A filter device according to the invention may further have extensions on more than one slender edge of the base body, and more than one extension may be further base bodies. In particular, a recess plate of a filter device according to the invention may comprise three base bodies in line, or four base bodies arranged in tiles.

Preferably, in a filter device according to the invention, the extension is clipped to the base body. Connecting the extension to the base body thus requires no external means, or at least reduces the demand for externally connecting force. Clipping may be performed by forming clipping means directly to the base body and/or to the extension, or by separate clipping means either inside the fluid duct, or gripping the slender edge of the base body and/or of the extension.

Further preferred, a filter device according to the invention has a support, running along the fluid pipe, that supports the recess plate. Stiffness of such recess plate is easily increased.

Such filter device according to the invention preferably has a cavity inside the support for piping the fluid. The support being a pipe inserted into the fluid pipe, and piping the fluid, reduces the risk of leakage of the fluid out of the fluid pipe.

Furthermore, in such filter device according to the invention, the support is clipped to the base body and/or to the extension. Clipping the support into the base body or into the extension simplifies assembling the recess plate.

In a pack of a filter device according to the invention, the recess plates are vertically stacked on top of each other or hanging side by side. The filter device is secured by hydraulic force, by the weight of the stacked recess plates and/or by mechanical means. Each filter chamber is equipped with at least one filter cloth, but may be equipped with two filter cloth, where in the first case the suspension is piped into the recess of one recess plate and permeating the filter cloth to the other, and in the latter case filled in between the filter cloths and permeating to both adjacent recess plates. In such filter device, recesses may have movable membranes, the membranes and the respective recesses enclosing a squeezing chamber, that may be loaded with a squeezing fluid for mechanically pressing the remaining filter cake. In such filter device according to the invention, recess plates are made of plastics, e.g. polypropylene (PP), or of metal, e.g. aluminium or steel.

Further in such filter device according to the invention, the filter chamber may be formed by two adjacent recesses, or by one single recess adjoining to a face of a recess plate, with no recess. Furthermore, the pack may contain a sequence of identical recess plates, in unchanging orientation, a sequence of identical recess plates, in changing orientation or a sequence of alternating recess plates. Accordingly, recess plates of a filter device according to the invention may have two recesses, one recess or even no recess at all.

### BEST MODE FOR CARRYING OUT THE INVENTION

The method according to the invention and the associated recess plate and filter device are subsequently described in more detail with reference to preferred embodiments illustrated in the drawing figures.
- Fig. 1a: shows a front view of a first recess plate, and
- Fig. 1b: shows a detail cut through this first recess plate,
- Fig. 2a: shows a front view of a second recess plate,
- Fig. 2b: shows a detail cut through this second recess plate, and
- Fig. 2c: shows a detail of this cut,
- Fig. 3: shows a detail cut through a third recess plate,
- Fig. 4: shows a detail of a cut through a fourth recess plate,
- Fig. 5: shows a detail of a cut through a fifth recess plate,
- Fig. 6: shows a detail of a cut through a sixth recess plate,
- Fig. 7: shows a detail of a cut through a seventh recess plate, and
- Fig. 8: shows a detail of a cut through a eighth recess plate.

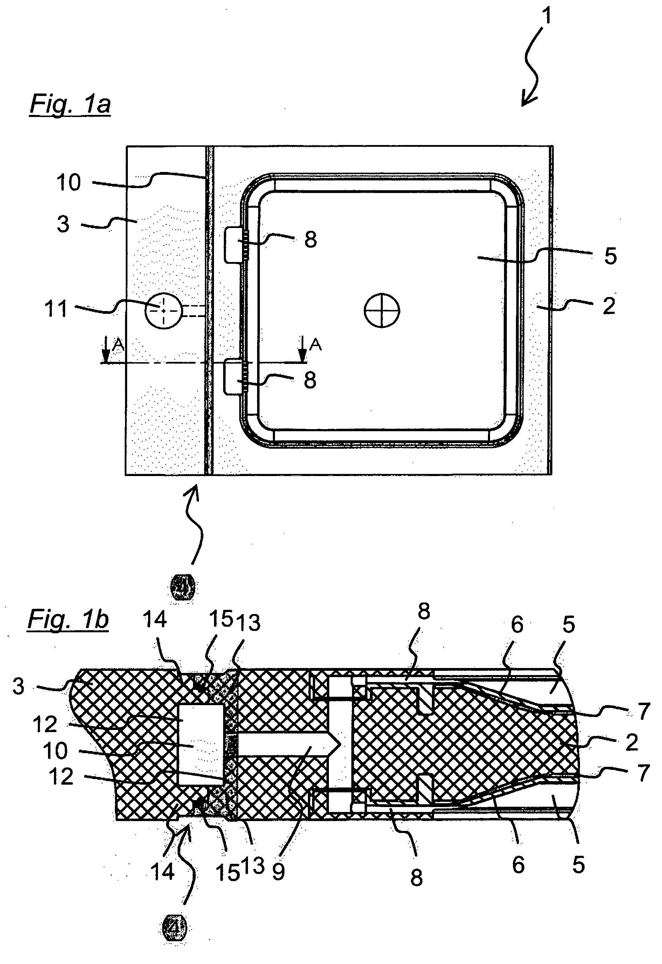

The first recess plate 1 of a filter device according to the invention, shown in figures 1a and 1b, has a base body 2 and an extension 3, that is connected to a vertical slender edge 4 of the base body 2. The first recess plate 1 is part of a first filter device, having a stationary head piece and a movable end piece, and a pack, of first recess plates 1 and other recess plates. In the pack, the first recess plates 1 and other recess plates are hanging side by side in an alternating sequence. The filter device is secured by hydraulic force. Each filter chamber is equipped with two filter cloth, where the suspension is filled in between the filter cloths and permeating to both adjacent recess plates 1. The first recess plates 1 and the other recess plates are made of polypropylene. Apart from the first recess plate 1, the first filter device and it's further parts are not shown.

The base body 2 of the first recess plate 1 has recesses 5 on the front face, and on the back face. And the first recess plate 1 - a so called "membrane plate" - has a movable membrane 6, attached to each of the recesses 5. The membranes 6 and the respective recesses 5 enclose two squeezing chambers 7, that may be loaded with a squeezing fluid for mechanically pressing the remaining filter cake. The other recess plate (not shown) - a so called "chamber plate" - of the first filter device is basically similar to the first recess plate 1, but has no membranes attached to the recesses 5.

Attached to the base body 2, the first recess plate 1 has two filtrate shoes for discharging the filtrate from the filter chamber into a fluid duct 9, that opens into a fluid pipe 10 running along the slender edge 4 between the base body 2 and the extension 3. The fluid pipe 10 connects to a filtrate drain 11 in the extension 3, that runs through the pack, back to the head piece.

Both the base body 2 and the extension 3 have recesses 12 running along the slender edge 4, that form the fluid pipe 10. The base body 2 has outer check rails 13, that protrude from the slender edge 4. The extension 3 has corresponding inner profiles 14, that protrude towards the base body 2, and that fit between the check rails 13 of the base body 2. Two sealing elements 15 are clamped between the check rails 13 and the corresponding profiles 14, sealing the fluid pipe 10 from the ambience of the first recess plate 1. The base body 2 and the extension 3 of the first recess plate 1 are clipped together by means of the sealing elements 15 and connected by an external frame (not shown).

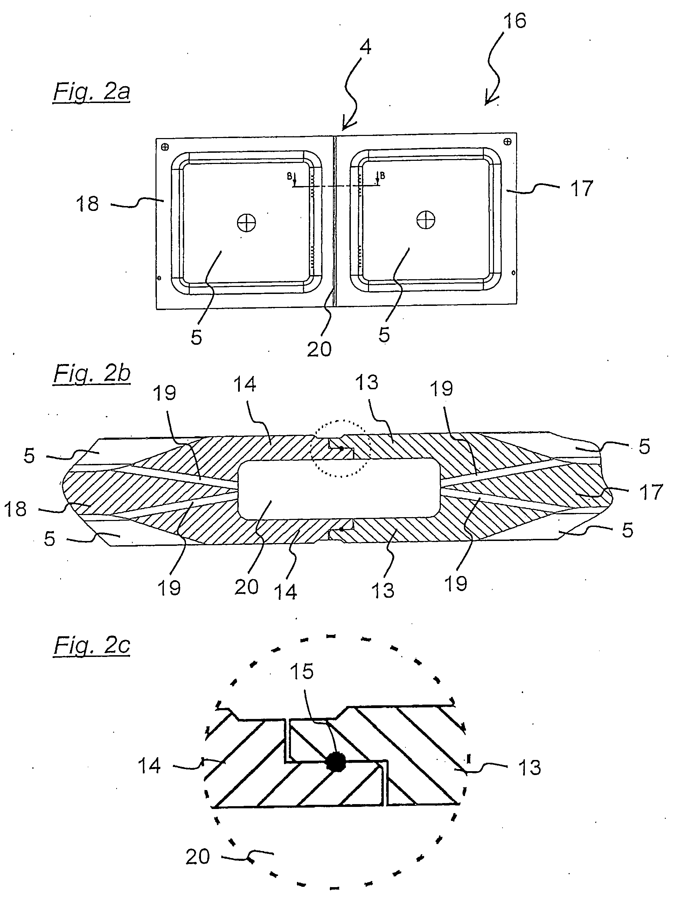

The second recess plate 16 of a filter device according to the invention, shown in figures 2a, 2b and 2c, has a first base body 17 and (as an extension) a second base body 18. Apart from different geometries, the second recess plate 16 is part of a second filter device that resembles the first filter device mentioned above, and the base bodies 17, 18 of the second recess plate 16 resemble the base body 2 of the first recess plate 1. Apart from the second recess plate 16, the second filter device and it's further parts are not shown. Basically identical features of the second recess plate 16 and it's base bodies 17, 18 are marked according to the first recess plate 1.

The base bodies of the second recess plate 16 each have two fluid ducts 19 for discharging the filtrate from the respective recesses into a common fluid pipe 20 between the base bodies. From the fluid pipe 20, the filtrate is discharged to the ambience, and to a collecting hutch (not shown) underneath the second recess plate 16.

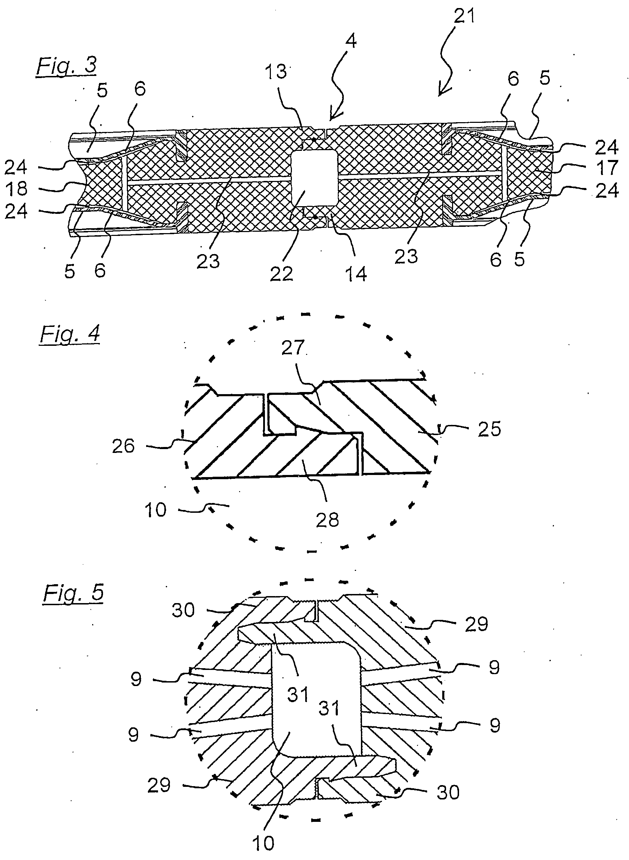

The third recess plate 21 of a filter device according to the invention, shown in figure 3, is part of the second filter device, basically resembles the second recess plate 16, and forms the pack in an alternating sequence with the second filter plate. Whereas the second recess plate 16 is a so-called "chamber plate", having no membranes, the third recess plate 21 is a so-called "membrane plate". The fluid pipe 22 of the third recess plate 21 connects to fluid ducts 23 for distributing a squeezing fluid into the respective squeezing chambers 24.

Figure 4 shows a detail of an alternative geometry for connecting the base body 25 and the extension 26 of a fourth recess plate, that is basically similar to the first recess plate 1, but further not shown. The check rails 27 of the base body 25 and the profiles 28 of the extension 26 both are barbed and interlock when assembling the fourth recess plate.

Figure 5 shows a detail of a further alternative geometry for connecting two identical base bodies 29 of a fifth recess plate, that are basically similar to the base body 25 of the fourth recess plate, but further not shown. Each base body 29 has a barbed check rail 30 corresponding to a barbed profile 31 of the respective other base body 29.

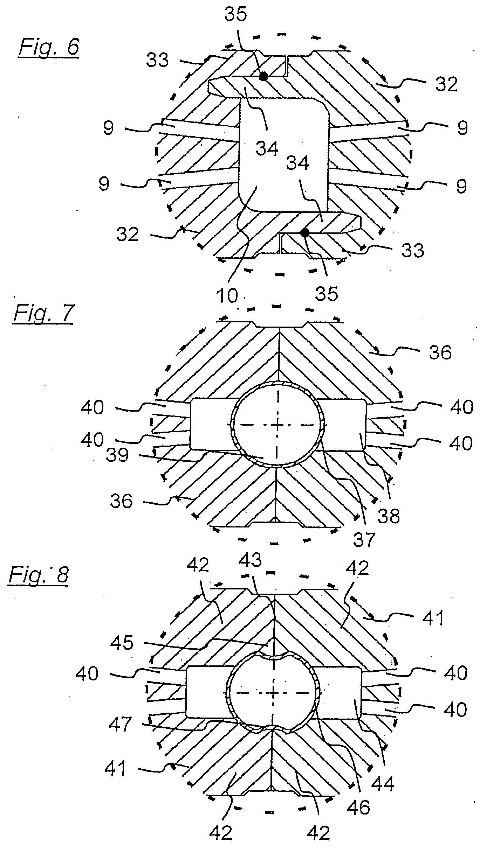

Figure 6 shows a detail of a further alternative geometry for connecting two identical base bodies 32 of a sixth recess plate, that is basically similar to the fifth recess plate, but further not shown. The check rails 33 and the profiles 34 of the sixth recess plate are not barbed.

The sixth recess plate has two sealing elements 35 between the corresponding check rails and profiles. The base bodies of the sixth recess plate are clipped together by means of the sealing elements 15 and connected by an external frame (not shown).

Figure 7 shows a detail of a further alternative geometry for connecting two identical base bodies 36 of a seventh recess plate, that resembles the second recess plate 16, but is further not shown. The seventh recess plate has a support 37 that runs along the fluid pipe 38. The support 37 is a pipe and has a cavity 39 for piping the fluid into or collecting the fluid from the fluid ducts 40. The base bodies of the seventh recess plate are connected by an external frame (not shown).

Figure 8 shows a detail of a further alternative geometry for connecting two identical base bodies 41 of an eighth recess plate, that resembles the seventh recess plate, but is further not shown. The base bodies have profiles 42 that run along the slender edge 43 and enclose the fluid pipe 44, and edges 45, protruding from the profiles 42 towards the support 46.

The support 46 has two recesses 47 that clip between the edges 45, thus fixing the base bodies 41 together.

In the figures

| | |
|---|---|
| 1 | recess plate |
| 2 | base body |
| 3 | extension |
| 4 | edge |
| 5 | recess |
| 6 | membrane |
| 7 | squeezing chamber |
| 8 | filtrate shoe |
| 9 | fluid duct |
| 10 | fluid pipe |
| 11 | filtrate drain |
| 12 | recess |
| 13 | check rail |
| 14 | profile |
| 15 | sealing element |
| 16 | recess plate |
| 17 | base body |
| 18 | base body |
| 19 | fluid duct |
| 20 | fluid pipe |
| 21 | recess plate |
| 22 | fluid pipe |
| 23 | fluid duct |
| 24 | squeezing chamber |
| 25 | base body |
| 26 | extension |
| 27 | check rail |
| 28 | profile |
| 29 | base body |
| 30 | check rail |
| 31 | profile |
| 32 | base body |
| 33 | check rail |
| 34 | profile |
| 35 | sealing element |
| 36 | base body |
| 37 | support |
| 38 | fluid pipe |
| 39 | cavity |
| 40 | fluid duct |
| 41 | base body |
| 42 | profile |
| 43 | edge |
| 44 | fluid pipe |
| 45 | edge |
| 46 | support |
| 47 | recess |

## Claims

1. Filter device, having a stationary head piece and a movable end piece, and a pack of a plurality of specimens including a recess plate (1, 16, 21) between the head piece and the end piece, the recess plate (1, 16, 21) having a base body (2, 17, 25, 29, 32, 41), and a recess (5) in the base body (2, 17, 25, 29, 32, 41), that forms a filter chamber between adjacent specimens, wherein the filter device has a filter cloth between the adjacent specimens for retaining a solid content of a suspension as a filter cake, and allowing a remaining liquid fraction of the suspension to pass as a filtrate, and wherein the recess plate (1, 16, 21) has
a. an extension (3, 26), that is connected to a slender edge (4) of the base body (2, 17, 25, 29, 32, 41),
b. a fluid duct (9, 19, 23, 40) that connects the fluid pipe (10, 20, 22, 38, 44) to the filter chamber, and
c. a fluid pipe (10, 20, 22, 38, 44) for discharging the filtrate out of the recess plate (1, 16, 21), that runs along the slender edge (4, 43),
***characterized in that*** the fluid pipe (10, 20, 22, 38, 44) runs between the base body (2, 17, 25, 29, 32, 41) and the extension (3, 26).

2. Filter device according to the preceding claim, ***characterized in that*** the extension is a second base body (18, 29, 32, 41), having a second fluid duct (9, 19, 23, 40) that connects the fluid pipe (10, 20, 22, 38, 44) to a second filter chamber.

3. Filter device according to one of the preceding claims, ***characterized in that*** the extension (26) is clipped to the base body (25, 29).

4. Filter device according to one of the preceding claims, ***characterized by*** a support (37, 46), running along the fluid pipe (10, 38, 44), that supports the recess plate.

5. Filter device according to the preceding claim, ***characterized by*** a cavity (39) inside the support (37, 46) for piping the fluid.

6. Filter device according to one of claims 5 and 6, ***characterized in that*** the support (46) is clipped to the base body (41) and/or to the extension.

## Patentansprüche

1. Filtervorrichtung, die ein stationäres Kopfteil und bewegliches Endteil hat und eine Packung von mehreren Proben, einschließlich einer Vertiefungsplatte (1, 16, 21) zwischen dem Kopfteil und dem Endteil, wobei die Vertiefungsplatte (1, 16, 21) einen Grundkörper (2, 17, 25, 29, 32, 41) und eine Vertiefung (5) im Grundkörper (2, 17, 25, 29, 32, 41) hat, die eine Filterkammer zwischen benachbarten Proben bildet, wobei die Filtervorrichtung ein Filtertuch zwischen den benachbarten Proben zum Zurückhalten eines Feststoffgehaltes einer Suspension als Filterkuchen hat und einer übrigbleibenden flüssigen Fraktion ermöglicht, als Filtrat zu passieren, und wobei die Vertiefungsplatte (1, 16, 21) Folgendes hat:
a. eine Erweiterung (3, 26), die mit einer schmalen Kante (4) des Grundkörpers (2, 17, 25, 29, 32, 41) verbunden ist,
b. einen Fluidkanal (9, 19, 23, 40), der das Fluidrohr (10, 20, 22, 38, 44) mit der Filterkammer verbindet,
c. ein Fluidrohr (10, 20, 22, 38, 44) zum Ableiten des Filtrats aus der Vertiefungsplatte (1, 16, 21), das entlang der schmalen Kante (4, 43) verläuft,
**dadurch gekennzeichnet, dass** das Fluidrohr (10, 20, 22, 38, 44) zwischen dem Grundkörper (2, 17, 25, 29, 32, 41) und der Erweiterung (3, 26) verläuft.

2. Filtervorrichtung nach dem vorherigen Anspruch, **dadurch gekennzeichnet, dass** die Erweiterung ein zweiter Grundkörper (18, 29, 32, 41) ist, der einen zweiten Fluidkanal (9, 19, 23, 40) hat, welcher das Fluidrohr (10, 20, 22, 38, 44) mit einer zweiten Filterkammer verbindet.

3. Filtervorrichtung nach einem der vorherigen Ansprüche, **dadurch gekennzeichnet, dass** die Erweiterung (26) an den Grundkörper (25, 29) angeklemmt ist.

4. Filtervorrichtung nach einem der vorherigen Ansprüche, **gekennzeichnet durch** eine Stütze (37, 46), die entlang des Fluidrohrs (10, 38, 44) verläuft und die Vertiefungsplatte stützt.

5. Filtervorrichtung nach dem vorherigen Anspruch, **gekennzeichnet durch** einen Hohlraum (39) innerhalb der Stütze (37, 46) zum Durchleiten des Fluids.

6. Filtervorrichtung nach einem der Ansprüche 5 und 6, **dadurch gekennzeichnet, dass** die Stütze (46) an den Grundkörper (41) und/oder die Erweiterung angeklemmt ist.

## Revendications

1. Dispositif de filtration, présentant une pièce frontale fixe et une pièce arrière mobile et un ensemble d'une pluralité d'échantillons comprenant une plaque à évidement (1, 16, 21) entre la pièce frontale et la pièce arrière, la plaque à évidement (1, 16, 21) présentant un corps de base (2, 17, 25, 29, 32, 41) et un évidement (5) dans le corps de base (2, 17, 25, 29, 32, 41) qui forme une chambre de filtration entre des échantillons adjacents, sachant que le dispositif de filtration présente une toile filtrante entre les échantillons adjacents pour retenir un contenu solide d'une suspension en tant que gâteau de filtration, et permettre à une fraction de liquide restante de la suspension de passer en tant que filtrat, et dans lequel la plaque à évidement (1, 16, 21) présente
a. une extension (3, 26) qui est reliée à un bord mince (4) du corps de base (2, 17, 25, 29, 32, 41),
b. un conduit de fluide (9, 19, 23, 40) qui relie un tuyau de fluide (10, 20, 22, 38, 44) à la chambre de filtration, et
c. le tuyau de fluide (10, 20, 22, 38, 44) pour décharger le filtrat hors de la plaque à évidement (1, 16, 21), qui passe le long du bord mince (4, 43),
**caractérisé en ce que** le tuyau de fluide (10, 20, 22, 38, 44) passe entre le corps de base (2, 17, 25, 29, 32, 41) et l'extension (3, 26).

2. Dispositif de filtration selon la revendication précédente, **caractérisé en ce que** l'extension est un second corps de base (18, 29, 32, 41) présentant un second conduit de fluide (9, 19, 23, 40) qui relie le tuyau de fluide (10, 20, 22, 38, 44) à une seconde chambre de filtration.

3. Dispositif de filtration selon l'une des revendications précédentes, **caractérisé en ce que** l'extension (26) est clipsée sur le corps de base (25, 29).

4. Dispositif de filtration selon l'une des revendications précédentes, **caractérisé par** un support (37, 46) passant le long du tuyau de fluide (10, 38, 44), qui supporte la plaque à évidement.

5. Dispositif de filtration selon la revendication précédente, **caractérisé par** une cavité (39) à l'intérieur du support (37, 46) pour acheminer le fluide dans un tuyau.

6. Dispositif de filtration selon les revendications 5 et 6, **caractérisé en ce que** le support (46) est clipsé au corps de base (41) et/ou à l'extension.
